# FASCICULE DE BREVET EUROPEEN

(11) **EP 2 085 005 B1**
(45) Date de publication et mention de la délivrance du brevet: **06.06.2012**
(21) Numéro de dépôt: 09356002.7
(22) Date de dépôt: 26.01.2009
(51) Int. Cl.: A47J 43/046, A47J 43/07

(54) **Appareil électroménager de préparation culinaire comprenant un boîtier renfermant un moteur et un récipient recevant un outil rotatif**
Elektrisches Haushaltsgerät zur Essenszubereitung, das ein Gehäuse mit einem Motor und einem Behälter umfasst, in den ein Rührwerkzeug eingeführt werden kann
Household cooking appliance with a housing containing a motor and a container with a rotary tool

(30) Priorité: 31.01.2008 FR 0800522
(43) Date de publication de la demande: 05.08.2009
(73) Titulaire: Seb S.A., 69130 Ecully (FR)
(72) Inventeur: Martin, Philippe, 53240 Andouille (FR); Paumard, Jonathan, 53470 Martigné-sur-Mayenne (FR); Pommerel, Vincent, 61000 Alençon (FR)
(74) Mandataire: Kiehl, Hubert

(56) Documents cités:
- WO-A-00/13563
- DE-U1- 29 717 688
- FR-A- 1 265 469
- GB-A- 2 167 312
- US-A1- 2002 176 320
- US-A1- 2007 194 032

## Description

La présente invention se rapporte au domaine technique général des appareils électroménager de préparation culinaire comportant un boîtier renfermant un moteur et comprenant un récipient recevant un outil rotatif, et se rapporte plus particulièrement à un appareil électroménager de préparation culinaire dans lequel l'outil de travail est entraîné en rotation par le moteur au moyen d'un mécanisme d'entraînement passant au travers d'une cheminée du récipient.

Il est connu, de la demande de brevet FR 2 879 427, un appareil de préparation culinaire comportant un boîtier renfermant un moteur et comprenant un récipient amovible prenant place sur un socle de réception du boîtier. Dans ce document, le récipient renferme un outil rotatif entraîné au moyen d'un mécanisme d'entraînement passant au travers d'une cheminée centrale du récipient et le moteur est disposé dans le boîtier, sous le socle de réception du récipient, de sorte que l'encombrement radial du boîtier est sensiblement égal à celui du récipient. Un tel agencement permet d'obtenir un appareil occupant une faible surface au sol sur un plan de travail.

Cependant, un tel appareil présente l'inconvénient de posséder un boîtier moteur qui est relativement haut de sorte qu'il peut être difficile de ranger un tel appareil dans un placard. La hauteur importante de l'appareil peut également conduire à des problèmes d'instabilités lors du traitement d'ingrédients générant un fort balourd, comme par exemple le pétrissage d'une pâte.

Aussi, un but de la présente invention est de proposer un appareil de préparation culinaire, comportant un récipient de grande capacité, qui soit très peu encombrant et économique à mettre en oeuvre. Un autre but de la présente invention est de proposer un appareil possédant une très grande stabilité.

A cet effet, l'invention se rapporte à un appareil électroménager de préparation culinaire destiné à hacher, mixer, râper ou émulsionner des aliments, comportant un boîtier renfermant un moteur et comprenant un récipient muni d'un fond surmonté d'une enveloppe définissant un volume recevant au moins un outil de travail disposé à proximité du fond du récipient, cet outil de travail étant entraîné en rotation par le moteur, caractérisé en ce que le moteur s'étend au moins partiellement dans le volume du récipient lorsque l'appareil est assemblé de manière à permettre son fonctionnement.

Selon une autre caractéristique de l'invention, le récipient est supporté par le boîtier et l'outil de travail est entraîné en rotation par le moteur au moyen d'un mécanisme d'entraînement passant au travers d'une cheminée du récipient, le moteur s'étendant au moins partiellement dans la cheminée du récipient.

Selon une autre caractéristique de l'invention, le récipient est monté de manière amovible sur le boîtier, le boîtier comportant un socle de réception comprenant un manchon en saillie s'engageant dans la cheminée du récipient lorsque ce dernier est mis en place sur le boîtier, le moteur étant disposé au moins partiellement dans le manchon du boîtier.

Selon une autre caractéristique de l'invention, l'appareil comporte différents types de récipients, de formes différentes, adaptés pour s'accoupler avec le socle de réception du boîtier.

Selon une autre caractéristique de l'invention, le boîtier comporte un volume s'étendant sous le socle de réception, le moteur s'étendant pour partie dans le manchon et pour partie dans le volume du boîtier disposé sous le socle de réception.

Selon une autre caractéristique de l'invention, le boîtier comporte un fond s'étendant sous le socle de réception, le moteur comportant une extrémité inférieure qui repose sur un élément support porté par le fond du boîtier et une extrémité supérieure qui est maintenue radialement par le manchon.

Selon encore une autre caractéristique de l'invention, le boîtier comporte des parois périphériques s'étendant dans le prolongement du récipient de sorte que l'encombrement radial du boîtier est similaire à celui du récipient.

Selon encore une autre caractéristique de l'invention, le boîtier présente un contour circulaire et le manchon est disposé au centre du boîtier.

Selon une autre caractéristique de l'invention, le moteur est surmonté d'un réducteur de vitesse s'étendant dans le manchon du boîtier, le réducteur étant accouplé en entrée à un arbre de sortie du moteur et comportant une sortie lente munie d'un entraîneur faisant saillie à l'extérieur du manchon.

Selon encore une autre caractéristique de l'invention, un joint d'étanchéité est disposé entre l'entraîneur et le manchon.

Selon une autre caractéristique de l'invention, le moteur est relié directement à un entraîneur faisant saillie à l'extérieur du manchon.

Selon une autre caractéristique de l'invention, l'outil est supporté par un moyeu porte outil s'engageant autour de la cheminée du récipient.

Selon une autre caractéristique de l'invention, le récipient est fermé par un couvercle muni avantageusement d'une goulotte d'alimentation.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un appareil de préparation culinaire selon un mode particulier de réalisation de l'invention équipé d'un disque à râper,
- la figure 2 est une vue en coupe, par le plan de la poignée, de l'appareil de la figure 1 équipé d'un outil coupant,
- la figure 3 est une vue en perspective éclatée de l'appareil des figures 1 et 2,
- la figure 4 est une vue en perspective éclatée du boîtier moteur de l'appareil,
- la figure 5 est une vue en perspective éclatée du réducteur monté sur le moteur de l'appareil.

Seuls les éléments nécessaires à la compréhension de l'invention ont été représentés. Pour faciliter la lecture des dessins les mêmes éléments portent les mêmes références d'une figure à l'autre.

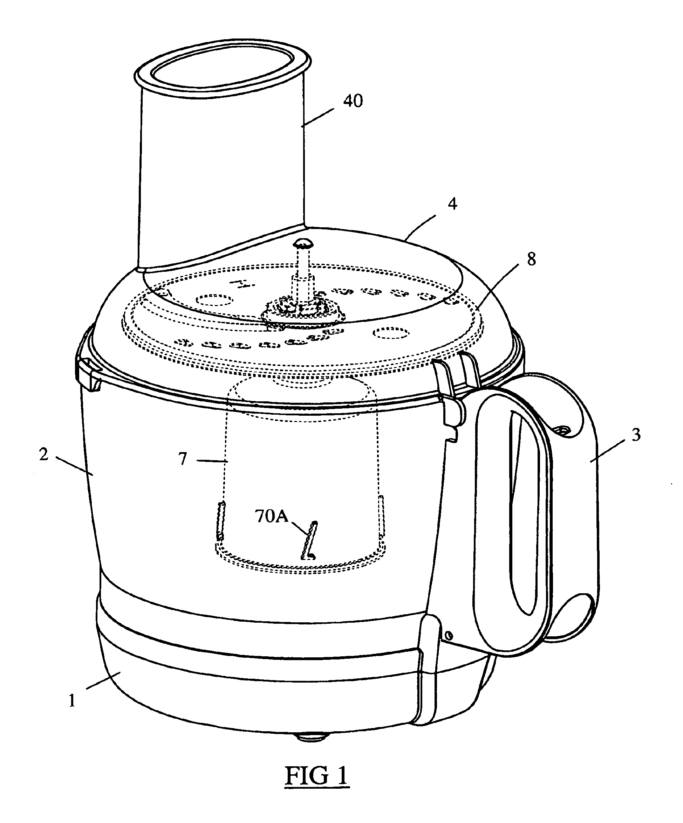

La figure 1 illustre un robot de préparation culinaire, notamment pour hacher ou trancher, comportant un boîtier 1 de forme cylindrique supportant un récipient 2 amovible comprenant une enveloppe de section circulaire supportant une poignée de préhension 3. Le récipient 2 est fermé par un couvercle 4 comportant, à l'opposé de la poignée 3, une goulotte d'alimentation 40 débouchant à l'intérieur du récipient et permettant l'introduction d'aliments sans avoir à soulever le couvercle 4.

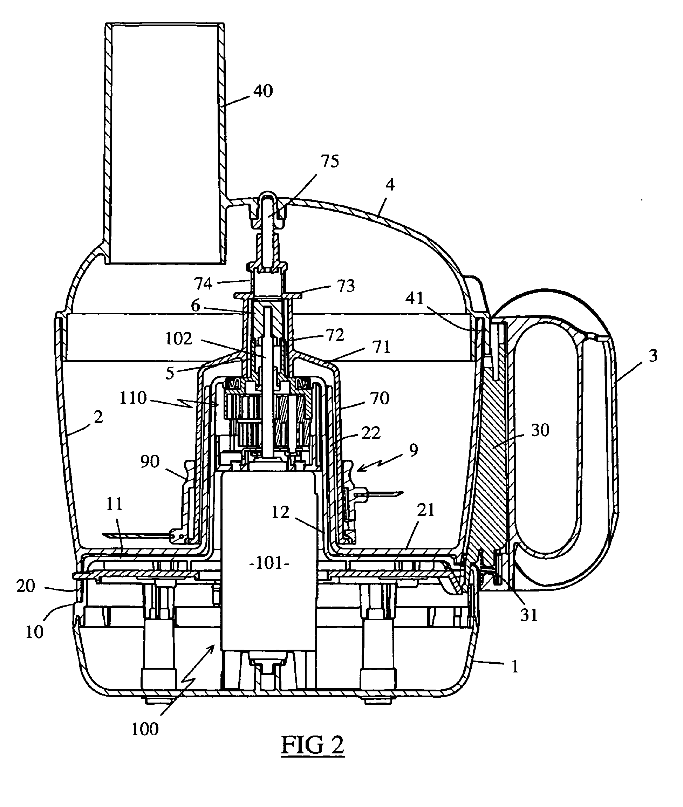

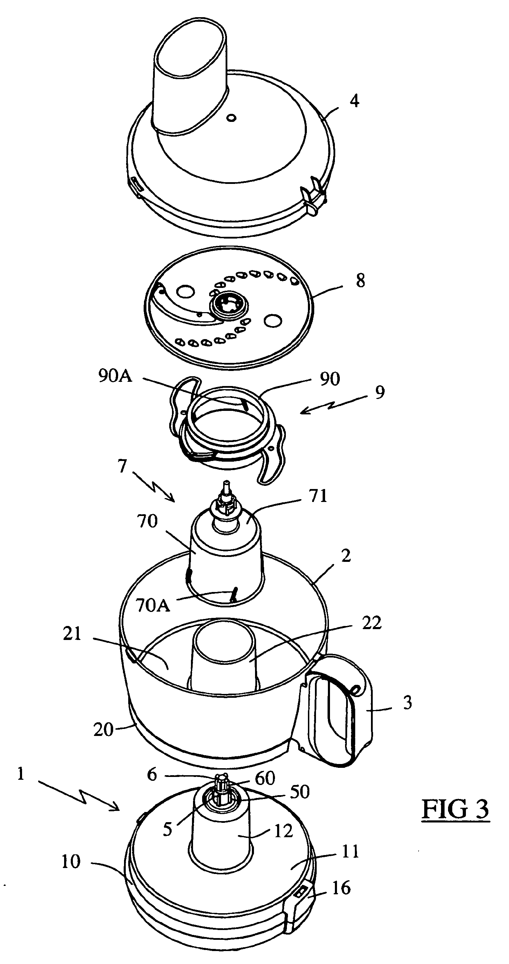

Conformément aux figures 2 et 3, le boîtier 1 comporte un socle de réception 11, présentant la forme d'un plateau circulaire occupant toute la surface supérieure du boîtier 1, sur lequel vient reposer le récipient 2. De manière avantageuse, le récipient 2 comporte une jupe 20 venant s'engager autour du bord périphérique du socle de réception 11 et comprenant une extrémité inférieure venant reposer sur un épaulement 10 formé à la périphérie du boîtier 1.

Le récipient 2 comprend un fond 21 s'étendant au dessus de la jupe 20 et comportant une cheminée centrale 22 faiblement conique, à l'extrémité supérieure ouverte, dans laquelle vient s'insérer un manchon 12 de forme complémentaire faisant saillie au centre du socle de réception 11. Le manchon 12 s'étend préférentiellement sur une hauteur légèrement supérieure à celle de la cheminée centrale 22 de sorte que le manchon 12 déborde légèrement de la cheminée centrale 22, ainsi qu'on peut le voir sur la figure 2.

L'extrémité supérieure du manchon 12 comporte une ouverture au niveau de laquelle débouchent un entraîneur inférieur 5 et un entraîneur supérieur 6 munis chacun de nervures d'accouplement 50, 60, les entraîneurs 5,6 étant disposés coaxialement l'un sur l'autre et les nervures 50 de l'entraîneur inférieur 5 s'étendant radialement sur une largeur plus importante que les nervures 60 de l'entraîneur supérieur 6.

De manière avantageuse, le récipient 2 renferme un moyeu porte-outil 7 comprenant une embase 70 de forme légèrement conique présentant un diamètre légèrement supérieur à celui de la cheminée centrale 22 du récipient et venant s'engager autour de cette cheminée centrale 22. L'embase 70 s'étend sur une hauteur légèrement supérieure à celle du manchon 12 et se prolonge par une paroi 71 convergeant vers un tube d'accouplement 72 comportant des rainures internes dans lesquelles viennent s'engager les nervures 50 de l'entraîneur inférieur 5 de manière à être solidaire en rotation de ce dernier, l'entraîneur supérieur 6 pouvant quant à lui tourner librement à l'intérieur du tube d'accouplement 72.

Le tube d'accouplement 72 est surmonté d'une zone de réception d'un premier outil rotatif 8, tel un disque à râper représenté en pointillé sur la figure 1, comprenant un épaulement 73 surmonté d'une bague d'entraînement 74, l'extrémité supérieure du moyeu porte-outil 7 comportant avantageusement un axe de guidage 75 venant s'insérer dans un palier porté par le couvercle 4 du récipient.

Le moyeu porte-outil 7 comporte également, à proximité de l'extrémité inférieure de son embase 70, une zone de réception d'un second outil rotatif 9, tel qu'un couteau hachoir illustré sur la figure 2, comportant des nervures externes 70A venant coopérer avec des nervures internes 90A portées par une bague d'entraînement 90 du second outil rotatif 9 pour entraîner ce dernier en rotation.

Le moyeu porte-outil 7 est entraîné en rotation par un moteur 100 contenu dans le boîtier 1 au moyen d'un mécanisme d'entraînement passant au travers de la cheminée centrale 22 du récipient.

De manière avantageuse, le moteur électrique 100 est un moteur à courant continu d'une puissance de l'ordre de 100 W et comporte classiquement un corps 101 cylindrique renfermant un stator et un rotor présentant un arbre de sortie 102 s'étendant à l'extérieur du corps 101. A titre d'exemple, le corps du moteur présente un diamètre de l'ordre de 4,5 cm et une hauteur de l'ordre de 7,5 cm.

Plus particulièrement selon l'invention, le moteur 100 est disposé dans le boîtier 1 de telle sorte que son corps 101 s'étend au moins partiellement à l'intérieur du manchon 12 venant s'introduire dans la cheminée centrale 22 du récipient, le manchon 12 présentant un diamètre intérieur légèrement supérieur à celui du corps 101 du moteur de l'ordre de 5 cm.

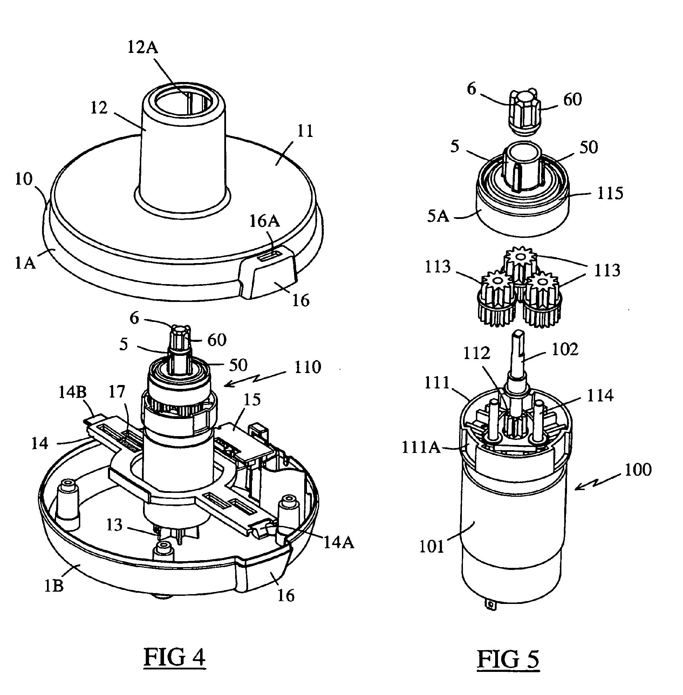

Conformément à la figure 4, le boîtier 1 est avantageusement constitué par l'assemblage d'une coquille supérieure 1 A, définissant le socle de réception 11 du récipient, sur une coquille inférieure 1B comportant un fond muni d'un plot central 13 supportant l'extrémité inférieure du moteur 100. Le moteur 100 s'étend, dans l'exemple illustré à la figure 2, pour moitié dans le manchon 12 et pour moitié dans le volume du boîtier 1 disposé sous le socle de réception 11.

Le boîtier 1 ainsi réalisé présente l'avantage de posséder une très faible hauteur, de l'ordre de 6 cm, au niveau du plateau circulaire s'étendant à la périphérie au manchon 12 et une hauteur de l'ordre de 13 cm au niveau du manchon 12.

De manière avantageuse, le boîtier 1 reçoit une commande de sécurité 14 pouvant se déplacer horizontalement sous le socle de réception 11 pour actionner un interrupteur de sécurité 15 venant déclencher la mise en marche du moteur 100, la commande de sécurité 14 comportant une première extrémité munie d'une rampe inclinée 14A venant s'étendre en regard d'une excroissance latérale 16 du boîtier prenant place sous la poigné 3 du récipient. L'excroissance latérale comporte une ouverture 16A à son extrémité supérieure et la poignée 3 du récipient comporte, de manière connue en soi, une tige de sécurité 30 dont l'extrémité inférieure vient traverser l'ouverture 16A pour repousser latéralement la commande de sécurité 14 à l'encontre d'un ressort de rappel 17 et fermer l'interrupteur de sécurité 15 lorsque le couvercle 4 est correctement verrouillé sur le récipient 2, le couvercle 4 comportant, de manière connue en soi, un ergot 41 venant repousser vers le bas la tige de sécurité 30 à l'encontre d'un ressort de rappel 31.

Conformément aux figures 2 et 4, la commande de sécurité 14 comporte à l'opposée de la première extrémité, une extrémité munie d'un loquet de verrouillage 14B venant s'insérer dans une ouverture de la jupe 20 du récipient et immobiliser le récipient 2 sur le boîtier 1 lors du déplacement de la commande de sécurité 14 provoqué par le verrouillage du couvercle 4.

De manière avantageuse, le mécanisme d'entraînement du moyeu porte-outil 7 comporte avantageusement un réducteur de vitesse 110 interposé entre l'entraîneur inférieur 5 et le moteur électrique 100. Ce réducteur de vitesse 110 est disposé entièrement dans le manchon 12 et comporte un bâti 111 qui est fixé sur l'extrémité supérieure du corps 101 du moteur, ce bâti 111 comportant des renfoncements latéraux 111A dans lesquels viennent s'engager des nervures 12A formées sur la surface intérieure du manchon 12 de sorte que le bâti 111 et le moteur 100 sont rendus solidaires du boîtier 1.

Conformément à la figure 5, le réducteur 110 est constitué par un système de train épicycloïdale et comporte un pignon 112 solidaire de l'arbre de sortie 102 du moteur, le pignon 112 engrainant sur la moitié inférieure de trois satellites 113 maintenus à 120° les uns des autres par un porte satellites 114. Les trois satellites 113 comportent deux étages de roues dentées, le diamètre de la roue dentée de l'étage inférieur, sur laquelle engraine le pignon 112, étant supérieur au diamètre de la roue dentée de l'étage supérieur qui engraine à l'intérieur d'un planétaire 5A solidaire de l'entraîneur inférieur 5. De manière avantageuse, le planétaire 5A supporte un joint d'étanchéité 115 s'étendant entre le planétaire 5A et le manchon 12 pour empêcher l'introduction d'éléments extérieurs à l'intérieur du boîtier 1.

L'entraîneur supérieur 6 est fixé directement à l'extrémité de l'arbre moteur 102 permettant ainsi d'avoir un entraîneur inférieur 5 tournant à vitesse réduite par rapport à la vitesse du moteur 100 et pouvant transmettre beaucoup de couple à l'outil rotatif 8,9, tel que le disque à râper ou le couteau hachoir, et un entraîneur supérieur 6 adapté pour l'entraînement d'outil tournant à haute vitesse.

L'appareil électroménager ainsi obtenu présente l'avantage de présenter une très grande compacité, notamment en hauteur, grâce à l'emplacement du moteur pour partie dans la cheminée du récipient. Un tel appareil présente également l'avantage d'une très grande simplicité de construction.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation de l'invention, le moteur pourra être disposé de manière plus ou moins prononcée dans le manchon du boîtier.

Ainsi, dans une variante de réalisation, l'appareil pourra comporter un récipient fixé à demeure sur le boîtier de sorte que le manchon du boîtier et la cheminée du récipient seront confondus et formeront une seule pièce dans laquelle le moteur s'étendra partiellement.

Ainsi, dans une autre variante de réalisation, le boîtier pourra recevoir différents types de récipients de dimensions différentes, en fonction du type et de la quantité de préparations à réaliser.

Ainsi, dans une variante de réalisation, le boîtier moteur pourra prendre place au dessus du récipient, en étant par exemple porté par le couvercle, et le moteur s'étendra dans un manchon prenant au centre du récipient, ce dernier pouvant alors être démuni de cheminée centrale.

## Revendications

1. Appareil électroménager de préparation culinaire destiné à hacher, mixer, râper ou émulsionner des aliments, comportant un boîtier (1) renfermant un moteur (100) et comprenant un récipient (2) monté de manière amovible sur le boîtier (1), le récipient recevant au moins un outil de travail (9) entraîné en rotation par ledit moteur (100) au moyen d'un mécanisme d'entraînement passant au travers d'une cheminée (22) du récipient (2), le moteur (100) comportant un corps (101) renfermant un stator et un rotor présentant un arbre de sortie (102) s'étendant à l'extérieur du corps (101), **caractérisé en ce que** le boîtier (1) comporte un socle de réception (11) comprenant un manchon (12) en saillie s'engageant dans la cheminée (22) du récipient (2) lorsque ce dernier est mis en place sur le boîtier (1) et **en ce que** le corps (101) dudit moteur (100) s'étend au moins partiellement dans le manchon (12) du boîtier (1).

2. Appareil électroménager selon la revendication 1, **caractérisé en ce qu'**il comporte différents types de récipients (2), de formes différentes, adaptés pour s'accoupler avec le socle de réception (11) du boîtier (1).

3. Appareil électroménager selon l'une quelconque des revendications 1 ou 2, **caractérisé en ce que** ledit boîtier (1) comporte un volume s'étendant sous le socle de réception (11) et **en ce que** le corps (101) dudit moteur (100) s'étend pour partie dans ledit manchon (12) et pour partie dans ledit volume du boîtier (1) disposé sous le socle de réception (11).

4. Appareil électroménager selon la revendication 3, **caractérisé en ce que** le boîtier (1) comporte un fond s'étendant sous le socle de réception (11) et **en ce que** le moteur (100) comporte une extrémité inférieure qui repose sur un élément support (13) porté par le fond du boîtier (1) et une extrémité supérieure qui est maintenue radialement par le manchon (12).

5. Appareil électroménager selon l'une quelconque des revendications 1 à 4, **caractérisé en ce que** ledit boîtier (1) comporte des parois périphériques s'étendant dans le prolongement du récipient (2) de sorte que l'encombrement radial du boîtier (1) est similaire à celui du récipient (2).

6. Appareil électroménager selon l'une quelconque des revendications 1 à 5, **caractérisé en ce que** ledit boîtier (1) présente un contour circulaire et **en ce que** le manchon (12) est disposé au centre du boîtier (1).

7. Appareil électroménager selon l'une quelconque des revendications 1 à 6, **caractérisé en ce que** ledit moteur (100) est surmonté d'un réducteur de vitesse (110) s'étendant dans le manchon (12) du boîtier, ledit réducteur (110) étant accouplé en entrée à l'arbre de sortie (102) du moteur (100) et comportant une sortie lente munie d'un entraîneur (5) faisant saillie à l'extérieur du manchon (12).

8. Appareil électroménager selon la revendication 7, **caractérisé en ce qu'**un joint d'étanchéité (115) est disposé entre ledit entraîneur (5) et ledit manchon (12).

9. Appareil électroménager selon l'une quelconque des revendications 1 à 8, **caractérisé en ce que** ledit outil de travail (9) est supporté par un moyeu porte outil (7) s'engageant autour de la cheminée (22) du récipient.

10. Appareil électroménager selon l'une quelconque des revendications 1 à 9,
**caractérisé en ce que** ledit moteur (100) est relié directement à un entraîneur (6) faisant saillie à l'extérieur du manchon (12).

11. Appareil électroménager selon l'une quelconque des revendications 1 à 10, **caractérisé en ce que** ledit récipient (2) est fermé par un couvercle (4) muni avantageusement d'une goulotte d'alimentation (40).

## Claims

1. An electrical household food preparation appliance designed for mincing, mixing, grating or emulsifying food, having a housing (1) containing a motor (100) and comprising a receptacle (2) mounted removably on the housing (1), the receptacle accepting at least one work tool (9) which is driven rotationally by said motor (100) by means of a drive mechanism passing through a skirt (22) of the receptacle (2), and the motor (100) having a body (101) containing a stator and a rotor having an output shaft (102) extending out from the body (101), **characterised in that** the housing (1) has a receiving base (11) comprising a projecting sleeve (12) engaging in the skirt (22) of the receptacle (2) when the latter is placed on the housing (1) and **in that** the body (101) of said motor (100) extends at least partly into the sleeve (12) of the housing (1).

2. An electrical household appliance according to claim 1, **characterised in that** it contains different types of receptacles (2), of different shapes, adapted for coupling with the receiving base (11) of the housing (1).

3. An electrical household appliance according to any one of claims 1 or 2, **characterised in that** said housing (1) contains a volume extending under the receiving base (11) and **in that** the body (101) of said motor (100) extends partly into said sleeve (12) and partly into said volume of the housing (1) arranged under the receiving base (11).

4. An electrical household appliance according to claim 3, **characterised in that** the housing (1) comprises a bottom extending under the receiving base (11) and **in that** the motor (100) contains a lower end which rests on a support element (13) carried by the bottom of the housing (1) and an upper end which is held radially by the sleeve (12).

5. An electrical household appliance according to any one of claims 1 to 4, **characterised in that** said housing (1) comprises peripheral walls extending as a continuation of the receptacle (2) such that the radial space of the housing (1) is similar to that of the receptacle (2).

6. An electrical household appliance according to any one of claims 1 to 5, **characterised in that** said housing (1) has a circular contour and **in that** the sleeve (12) is arranged in the middle of the housing (1).

7. An electrical household appliance according to any one of claims 1 to 6, **characterised in that** said motor (100) is surmounted by a speed reducer (110) extending into the sleeve (12) of the housing, said reducer (110) being coupled at the inlet of the output shaft (102) of the motor (100) and containing a slow output fitted with a drive (5) projecting out from the sleeve (12).

8. An electrical household appliance according to claim 7, **characterised in that** a seal (115) is provided between said drive (5) and said sleeve (12).

9. An electrical household appliance according to any one of claims 1 to 8, **characterised in that** said work tool (9) is supported by a tool holding hub (7) which engages around the skirt (22) of the receptacle.

10. An electrical household appliance according to any one of claims 1 to 9, **characterised in that** said motor (100) is connected directly to a drive (6) projecting out from the sleeve (12).

11. An electrical household appliance according to any of claims 1 to 10, **characterised in that** said receptacle (2) is closed by a lid (4) fitted advantageously with a feed tube (40).

## Patentansprüche

1. Elektrohaushaltsgerät für kulinarische Zubereitungen, das zum Hacken, Mixen, Raspeln oder Emulgieren von Lebensmitteln bestimmt ist, umfassend ein Gehäuse (1), das einen Motor (100) einschließt, und mit einem Behälter (2), der abnehmbar auf dem Gehäuse (1) angebracht ist, wobei der Behälter mindestens ein Arbeitswerkzeug (9) aufnimmt, das vom Motor (100) mit Hilfe eines Antriebsmechanismus in Drehung versetzt wird, der durch einen Schacht (22) des Behälters (2) hindurch verläuft, wobei der Motor (100) einen Körper (101) umfasst, der einen Stator und einen Rotor einschließt, mit einer Ausgangswelle (102), die sich aus dem Körper (101) hinaus erstreckt, **dadurch gekennzeichnet, dass** das Gehäuse (1) einen Aufnahmesockel (11) umfasst, der einen vorspringenden Stutzen (12) aufweist, der sich in den Schacht (22) des Behälters (2) einfügt, wenn Letzterer auf dem Gehäuse (1) angeordnet wird, und **dadurch**, dass sich der Körper (101) des Motors (100) mindestens teilweise in den Stutzen (12) des Gehäuses (1) erstreckt.

2. Elektrohaushaltsgerät nach Anspruch 1, **dadurch gekennzeichnet, dass** es verschiedene Arten von Behältern (2) mit verschiedenen Formen umfasst, die angepasst sind, um mit dem Aufnahmesockel (11) des Gehäuses (1) verkoppelt zu werden.

3. Elektrohaushaltsgerät nach einem der Ansprüche 1 oder 2, **dadurch gekennzeichnet, dass** das Gehäuse (1) ein Volumen umfasst, das sich unter dem Aufnahmesockel (11) erstreckt, und **dadurch**, dass sich der Körper (101) des Motors (100) zum Teil in den Stutzen (12) und zum Teil in das Volumen des Gehäuses (1) erstreckt, das unter dem Aufnahmesockel (11) angeordnet ist.

4. Elektrohaushaltsgerät nach Anspruch 3, **dadurch gekennzeichnet, dass** das Gehäuse (1) einen Boden umfasst, der sich unter dem Aufnahmesockel (11) erstreckt, und **dadurch**, dass der Motor (100) ein unteres Ende, das auf einem Tragelement (13) aufliegt, das vom Boden des Gehäuses (1) getragen wird, und ein oberes Ende umfasst, das vom Stutzen (12) radial gehalten wird.

5. Elektrohaushaltsgerät nach einem der Ansprüche 1 bis 4, **dadurch gekennzeichnet, dass** das Gehäuse (1) umlaufende Wände umfasst, die sich in der Verlängerung des Behälters (2) erstrecken, so dass die radiale Ausdehnung des Gehäuses (1) jener des Behälters (2) ähnlich ist.

6. Elektrohaushaltsgerät nach einem der Ansprüche 1 bis 5, **dadurch gekennzeichnet, dass** das Gehäuse (1) eine kreisförmige Kontur aufweist, und **dadurch**, dass der Stutzen (12) in der Mitte des Gehäuses (1) angeordnet ist.

7. Elektrohaushaltsgerät nach einem der Ansprüche 1 bis 6, **dadurch gekennzeichnet, dass** oben auf dem Motor (100) ein Untersetzungsgetriebe (110) angebracht ist, das sich in den Stutzen (12) des Gehäuses erstreckt, wobei das Getriebe (110) am Eingang mit der Ausgangswelle (102) des Motors (100) verkoppelt ist und einen langsamen Ausgang umfasst, der mit einem Mitnehmer (5) versehen ist, der aus dem Stutzen (12) herausragt.

8. Elektrohaushaltsgerät nach Anspruch 7, **dadurch gekennzeichnet, dass** eine Dichtung (115) zwischen dem Mitnehmer (5) und dem Stutzen (12) angeordnet ist.

9. Elektrohaushaltsgerät nach einem der Ansprüche 1 bis 8, **dadurch gekennzeichnet, dass** das Arbeitswerkzeug (9) von einer Werkzeugtragnabe (7) getragen wird, die um den Schacht (22) des Behälters herum aufgesetzt wird.

10. Elektrohaushaltsgerät nach einem der Ansprüche 1 bis 9, **dadurch gekennzeichnet, dass** der Motor (100) direkt mit einem Mitnehmer (6) verbunden ist, der aus dem Stutzen (12) herausragt.

11. Elektrohaushaltsgerät nach einem der Ansprüche 1 bis 10, **dadurch gekennzeichnet, dass** der Behälter (2) von einem Deckel (4) verschlossen wird, der vorteilhafterweise mit einem Einfüllstutzen (40) versehen ist.
